(19) **Europäisches Patentamt / European Patent Office / Office européen des brevets**

(11) **EP 4 602 732 B1**

(12) # EUROPEAN PATENT SPECIFICATION

(45) Date of publication and mention of the grant of the patent:
**18.02.2026 Bulletin 2026/08**

(21) Application number: **22830825.0**

(22) Date of filing: **07.12.2022**

(51) International Patent Classification (IPC):
$H04B\ 7/06^{(2006.01)}$   $G06N\ 3/02^{(2006.01)}$
$G06N\ 20/00^{(2019.01)}$   $G06N\ 3/0455^{(2023.01)}$
$G06N\ 3/063^{(2023.01)}$   $G06N\ 3/084^{(2023.01)}$
$G06N\ 3/098^{(2023.01)}$

(52) Cooperative Patent Classification (CPC):
**H04B 7/063; G06N 3/0455; G06N 3/063; G06N 3/084; G06N 3/098; H04B 7/0645; H04B 7/0658;** G06N 20/00

(86) International application number:
**PCT/EP2022/084753**

(87) International publication number:
**WO 2024/078731 (18.04.2024 Gazette 2024/16)**

(54) **MASKED TRANSMISSION OF AUTO-ENCODED CSI DATA**

MASKIERTE ÜBERTRAGUNG VON SELBSTKODIERTEN CSI-DATEN

TRANSMISSION MASQUÉE DE DONNÉES CSI AUTO-ENCODÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **10.10.2022 GR 20220100827**

(43) Date of publication of application:
**20.08.2025 Bulletin 2025/34**

(73) Proprietor: **Telefonaktiebolaget LM Ericsson (publ)**
**164 83 Stockholm (SE)**

(72) Inventors:
• **VANDIKAS, Konstantinos**
 **169 73 Solna (SE)**
• **ALABBASI, Abdulrahman**
 **164 44 Kista (SE)**

• **JEONG, Jaeseong**
 **169 73 Solna (SE)**
• **SZEBENYEI, Máté**
 **1114 Budapest (HU)**
• **KARAPANTELAKIS, Athanasios**
 **169 79 Solna (SE)**
• **NIKOU, Alexandros**
 **182 50 Stockholm (SE)**
• **LARSSON FORSBERG, Albin**
 **183 32 Täby (SE)**

(74) Representative: **Ericsson Patent Development Torshamnsgatan 21-23 164 80 Stockholm (SE)**

(56) References cited:
**WO-A1-2022/015221**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Technical Field</u>

The present disclosure relates to methods for controlling wireless communication and to corresponding devices, systems, and computer programs.

<u>Background</u>

In wireless communication technologies, such as in wireless communication networks as specified by 3GPP (3rd Generation Partnership Project), it is known to signal channel state information (CSI) data, i.e., information on link quality, between wirelessly communicating devices. For example, in the LTE technology and the NR technology specified by 3GPP, a UE (user equipment) signals CSI to an access node it is connected to, in the LTE technology denoted as "eNB", and in the NR technology denoted as "gNB".

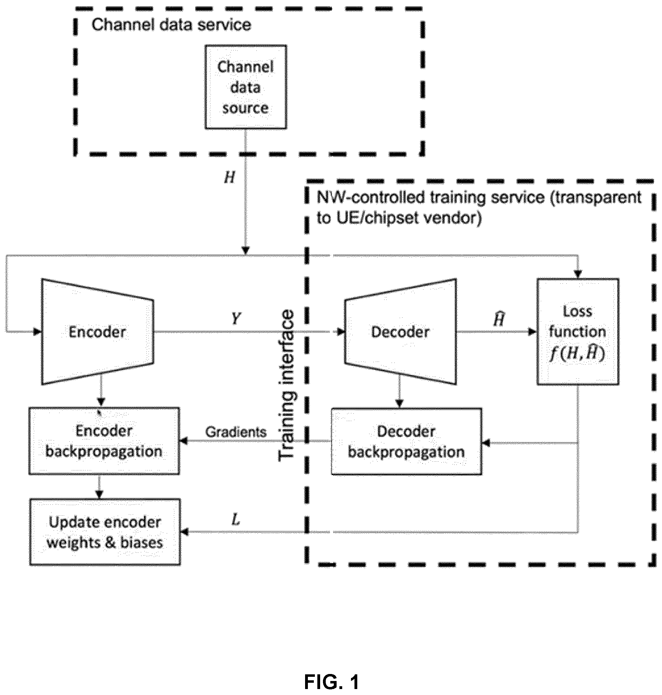

To reduce traffic between UE and gNB, it is also known to convey the CSI data using an autoencoder, i.e., an artificial intelligence (AI) based encoding mechanism. An autoencoder for CSI data typically consists of an encoder part located at the UE and decoder part located at the gNB. The encoder part produces a latent representation of CSI data as observed by the UE. The latent representation is more compact than the originally observed CSI data, so that transmission of the latent representation may help to reduce the traffic load. At the gNB, the decoder part produces a reconstruction of the observed CSI data. The decoder part and the encoder part are typically jointly trained based on a machine-learning (ML) process. Fig. 1 schematically illustrates an example of an architecture for implementing such ML-based training process. As can be seen, a channel data service provides channel data H which are used as input of the training process, in particular as input data to the encoder part and for computation of a loss function $f(H,\hat{H})$ from the output of the decoder part. The loss function is in turn used as input for decoder backpropagation, for encoder backpropagation, and for updating encoder weights and biases. In the illustrated example, the training process is based on a network (NW) controlled training service. WO 2022/015221 A1 discloses a method for CSI feedback using an autoencoder.

Even though the use of an autoencoder may contribute to reduction of the traffic load associated with the transmission of CSI data, the traffic load may still be significant, in particular if the CSI data needs to be indicated with high precision and/or has high dimensionality.

Accordingly, there is a need for increasing efficiency of transmission of CSI data using an autoencoder.

<u>Summary</u>

According to an embodiment, a method of controlling wireless communication in a wireless communication network is provided. According to the method, a wireless device measures CSI data for a wireless channel between the wireless device and a node of the wireless communication network. Further, encodes the CSI data by an encoder part of an ML-based autoencoder. Further, the wireless device applies a mask to the encoded CSI data. The mask defines unmasked data elements and masked elements of the encoded CSI data. The wireless device then transmits the encoded CSI data excluding the masked data elements to the node.

According to a further embodiment, a method of controlling wireless communication in a wireless communication network is provided. According to the method, a node of the wireless communication network receives, for a wireless channel between a wireless device and the node, data representing CSI data measured by the wireless device and encoded at the wireless device by an encoder part of an ML based autoencoder. Further, the node decodes the received data by a decoder part of the ML-based autoencoder, taking into account that at the wireless device a mask was applied to the encoded CSI data, the mask defining unmasked data elements and masked elements of the encoded CSI data, and that the received data exclude the masked data elements.

According to a further embodiment, a wireless device for operation in a wireless communication network is provided. The wireless device is configured to measure CSI data for a wireless channel between the wireless device and a node of the wireless communication network. Further, the wireless device is configured to encode the CSI data by an encoder part of an ML-based autoencoder. Further, the wireless device is configured to apply a mask to the encoded CSI data, the mask defining unmasked data elements and masked elements of the encoded CSI data. Further, the wireless device is configured to transmit the encoded CSI data excluding the masked data elements to the node.

According to a further embodiment, a wireless device for operation in a wireless communication network is provided. The wireless device comprises at least one processor and a memory. The memory contains instructions executable by said at least one processor, whereby the wireless device is operative to measure CSI data for a wireless channel between the wireless device and a node of the wireless communication network. Further, the memory contains instructions executable by said at least one processor, whereby the wireless device is operative to encode the CSI data by an encoder part of an ML-based autoencoder. Further, the memory contains instructions executable by said at least one processor, whereby the wireless device is operative to apply a mask to the encoded CSI data, the mask defining unmasked data elements and masked elements of the encoded CSI data. Further, the memory contains instructions executable by said at least one processor, whereby the wireless device is operative to transmit the encoded CSI data excluding the masked data elements to the node.

According to a further embodiment, a node for a wireless communication network is provided. The node is configured to, for a wireless channel between a wireless device and the node, receive data representing CSI data measured by the wireless device and encoded at the wireless device by an encoder part of an ML-based autoencoder. Further, the node is configured to decode the received data by a decoder part of the ML-based autoencoder, taking into account that at the wireless device a mask was applied to the encoded CSI data, the mask defining unmasked data elements and masked elements of the encoded CSI data, and that the received data exclude the masked data elements.

According to a further embodiment, a node for a wireless communication network is provided. The node comprises at least one processor and a memory. The memory contains instructions executable by said at least one processor, whereby the node is operative to, for a wireless channel between a wireless device and the node, receive data representing CSI data measured by the wireless device and encoded at the wireless device by an encoder part of an ML-based autoencoder. Further, the memory contains instructions executable by said at least one processor, whereby the node is operative to decode the received data by a decoder part of the ML-based autoencoder, taking into account that at the wireless device a mask was applied to the encoded CSI data, the mask defining unmasked data elements and masked elements of the encoded CSI data, and that the received data exclude the masked data elements.

According to a further embodiment, a computer program or computer program product is provided, e.g., in the form of a non-transitory storage medium, which comprises program code to be executed by at least one processor of a wireless device for operation in a wireless communication network. Execution of the program code causes the wireless device to measure CSI data for a wireless channel between the wireless device and a node of the wireless communication network. Further, execution of the program code causes the wireless device to encode the CSI data by an encoder part of an ML-based autoencoder. Further, execution of the program code causes the wireless device to apply a mask to the encoded CSI data, the mask defining unmasked data elements and masked elements of the encoded CSI data. Further, execution of the program code causes the wireless device to transmit the encoded CSI data excluding the masked data elements to the node.

According to a further embodiment, a computer program or computer program product is provided, e.g., in the form of a non-transitory storage medium, which comprises program code to be executed by at least one processor of a node for a wireless communication network. Execution of the program code causes the node to, for a wireless channel between a wireless device and the node, receive data representing CSI data measured by the wireless device and encoded at the wireless device by an encoder part of an ML-based autoencoder. Further, execution of the program code causes the node to decode the received data by a decoder part of the ML-based autoencoder, taking into account that at the wireless device a mask was applied to the encoded CSI data, the mask defining unmasked data elements and masked elements of the encoded CSI data, and that the received data exclude the masked data elements.

Details of such embodiments and further embodiments will be apparent from the following detailed description of embodiments.

Brief Description of the Drawings

Fig. 1 schematically illustrates an example of an architecture for training an autoencoder.

Fig. 2 schematically illustrates a wireless communication network according to an embodiment.

Fig. 3 schematically illustrates an architecture for providing masks according to an embodiment.

Figs. 4A and 4B illustrate an example of processes involving training and operation of an autoencoder according to an embodiment.

Fig. 5A illustrates an example of processes for mask selection according to an embodiment.

Fig. 5B illustrates a further example of processes for mask selection according to an embodiment.

Fig. 6 shows a flowchart for schematically illustrating a method according to an embodiment.

Fig. 7 shows a flowchart for schematically illustrating a further method according to an embodiment.

Fig. 8 schematically illustrates structures of a wireless device according to an embodiment.

Fig. 9 schematically illustrates structures of a network node according to an embodiment.

Fig. 10 schematically illustrates interaction of a host and a wireless device according to an embodiment.

Detailed Description

In the following, concepts in accordance with exemplary embodiments of the present disclosure will be explained in more detail and with reference to the accompanying drawings. The illustrated embodiments relate to control of wireless communication in a wireless communication network, in particular to control of CSI signaling from a wireless device to a node of the wireless communication network. The wireless communication network may for example be a cellular network, e.g., as specified by 3GPP. The wireless communication may then for example be based on the NR technology, the LTE technology, or a future 6G (6th Generation) technology. However, the concepts could also be applied in other types of wireless communication network, e.g., based on a WLAN (Wireless Local Area Network) technology.

As used herein, the term "wireless device" (WD) refers to a device capable, configured, arranged, and/or operable to communicate wirelessly with network nodes and/or other WDs. Unless otherwise noted, the term WD may be used interchangeably herein with UE. Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a Voice over IP (VoIP) phone, a wireless local loop phone, a desktop computer, a Personal Digital Assistant (PDA), a wireless camera, a gaming console or device, a music storage device, a playback appliance, a wearable terminal device, a wireless endpoint, a mobile station, a tablet, a laptop, Laptop Embedded Equipment (LEE), Laptop Mounted Equipment (LME), a smart device, a wireless Customer Premise Equipment (CPE), a vehicle mounted wireless terminal device, a connected vehicle, etc. In some examples, in an Internet of Things (IoT) scenario, a WD may also represent a machine or other device that performs monitoring and/or measurements, and transmits the results of such monitoring and/or measurements to another WD and/or a network node. The WD may in this case be a Machine-to-Machine (M2M) device, which may in a 3GPP context be referred to as a Machine-Type Communication (MTC) device. As one particular example, the WD may be a UE implementing the 3GPP Narrowband IoT (NB-IoT) standard. Particular examples of such machines or devices are sensors, metering devices such as power meters, industrial machinery, home or personal appliances (e.g., refrigerators, televisions, etc.), or personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

In the illustrated concepts, an autoencoder is applied for signaling CSI data from a wireless device is applied to a node of the wireless communication network, e.g., from a UE to a gNB or other type of access node. The output of the encoder part of the autoencoder, i.e., the latent representation of the CSI data, is further subjected to masking. Specifically, a mask is applied to the latent representation of the CSI data. The mask defines unmasked data elements and masked elements of the encoded CSI data, and only the unmasked data elements are transmitted to the node. Accordingly, the amount of data which needs to be signaled can be further reduced. The decoder part of the autoencoder reconstructs the CSI data from the masked latent representation. Here, the decoder part may benefit from being aware that the mask is applied to the latent representation and from being trained taking into account the masking. Further, the mask may be selected to obtain a desired reduction of the amount of data which needs to be signaled while still allowing a desired level of quality of reconstruction of the CSI data at the decoder part.

In the following explanations, the data space to which the encoder part of the autoencoder maps the CSI data is also denoted as latent space. Due to the compression associated with the encoding performed by the encoder part, the latent space has smaller dimensionality than the original data space in which the CSI data is defined. For example, if the measured CSI data is represented by vectors having 64 elements with precision of 64 bit, corresponding to a dimension of 4096 bit, the latent representation could be based on vectors having 32 elements with precision of 16 bit, thus reducing the dimension to 512. The masking then further reduces the amount of data that needs to be signaled by excluding certain data elements from being transmitted. The data space that can be occupied by the masked latent representation of the CSI data is herein also denoted as masked latent space.

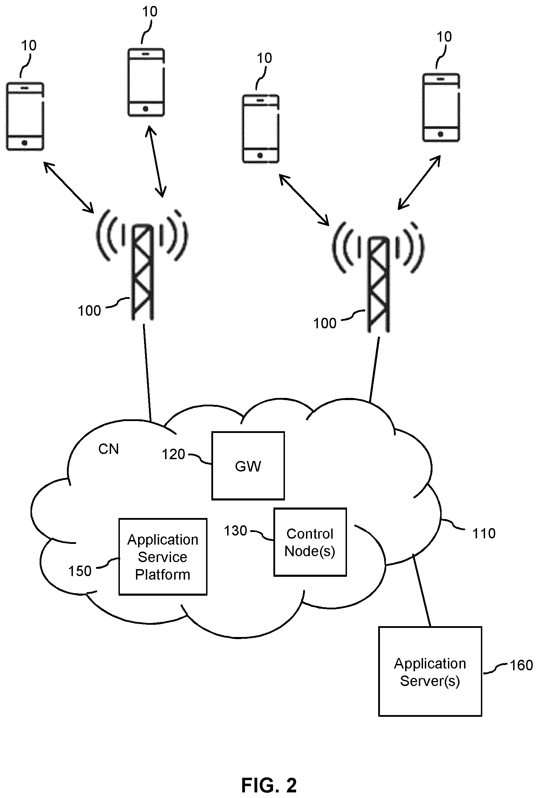

Fig. 2 illustrates exemplary structures of the communication network, which in the illustrated example is assumed to be a wireless communication network as specified by 3GPP. In particular, Fig. 2 shows multiple UEs 10 which are served by an access nodes 100 of the wireless communication network. Here, it is noted that each access node 100 may serve a number of cells within the coverage area of the wireless communication network. The access nodes 100 may for example correspond to a gNB of the NR technology or to an eNB of the LTE technology. The access nodes 100 may be regarded as being part of an RAN (Radio Access Network) of the wireless communication network. Further, Fig. 2 schematically illustrates a CN (Core Network) 110 of the wireless communication network. In Fig. 2, the CN 110 is illustrated as including one or more gateways 120 and one or more control node(s) 130. The gateway 120 may be responsible for handling user plane traffic of the UEs 10, e.g., by forwarding user plane data traffic from a UE 10 to a network destination or by forwarding user plane data traffic from a network source to a UE 10. Here, the network destination may correspond to another UE 10, to an internal node of the wireless communication network, or to an external node which is connected to the wireless communication network. Similarly, the network source may correspond to another UE 10, to an internal node of the wireless communication network, or to an external node which is connected to the wireless communication network. The control node(s) 130 may be used for controlling the user data traffic, e.g., by providing control data to the access nodes 100, the gateway 120, and/or to the UE 10.

As illustrated by double-headed arrows, the access nodes 100 may send downlink transmissions to the UEs 10, and the UEs 10 may send uplink transmissions to the access nodes 100. The downlink transmissions and uplink transmissions may be used to provide various kinds of services to the UEs 10, e.g., a voice service, a multimedia service, or a data service. Such services may be hosted in the CN 110, e.g., by a corresponding network node. By way of example, Fig. 2 illustrates a service platform 150 provided in the CN 110. Further, such services may be hosted externally, e.g., by an AF (application function) connected to the CN 110. By way of example, Fig. 2 illustrates one or more application servers 180 connected to the CN 110. The application server(s) 180 could for example connect through the Internet or some other wide area communication network to the CN 110. The service platform 150 may be based on a server or a cloud computing system and be hosted by one or more host computers. Similarly, the application server(s) 180 may be based on a server or a cloud computing system and be hosted by one or more host computers. The application server(s) 160 may include or be associated with one or more AFs that enable interaction with the CN 110 to provide one or more services to the UEs 10, corresponding to one or more applications. These services or applications may generate the user plane data traffic conveyed by the downlink transmissions and/or the uplink transmissions between the UE 10 and the respective access node 100 it is connected to. Accordingly, the application server(s) 180 may include or correspond to the above-mentioned network destination and/or network source for the user data traffic. In the respective UE 10, such service may be based on an application (or shortly "app") which is executed on the UE 10. Such application may be pre-installed or installed by the user. Such application may generate at least a part of the user plane traffic between the UE 10 and the access node 100.

In the illustrated concepts, for at least some of the UEs 10 illustrated in Fig. 2, an autoencoder may be used for conveying CSI data from the UE 10 to the access node 100, and masking of the latent representation of the CSI data generated by the encoder part of the autoencoder may be used to further reduce the amount of data which needs to be signaled.

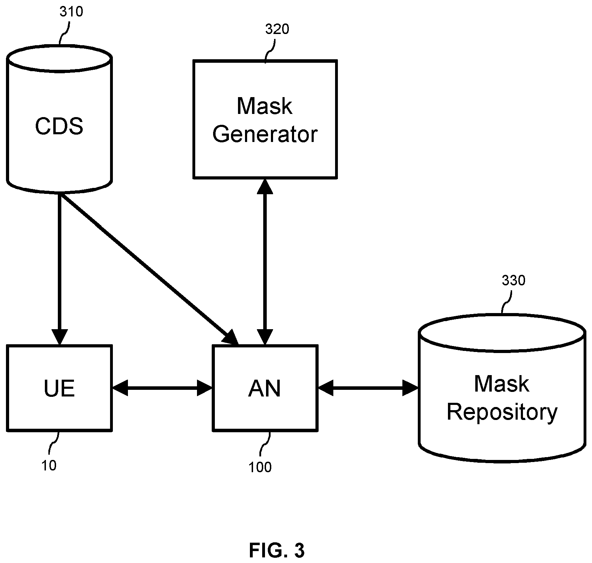

Fig. 3 schematically illustrates an architecture that may be used for implementing the illustrated concepts. As illustrated, the architecture includes a Channel Data Source (CDS) 310, a mask generator 320, and a mask repository 330. The CDS 310, the mask generator, and the mask repository may be used during training and/or operation of the autoencoder which is used in the masked transmission of the latent representation of the CSI data.

The CDS 310 may provide channel data corresponding to CSI data which may occur for the channel between the UE 10 and the access node (AN) 100. The channel data provided by the CDS may be used for training the autoencoder and may be collected during operation of the wireless communication network and/or be obtained from simulations. The CDS 310 could for example be provided as part of a channel data service, e.g., hosted by the operator of the wireless communication network or hosted by a third party service provider.

The mask generator 320 may calculate different masks which can be applied to train the decoder part of the autoencoder. In such masked training process, training of the decoder part of the autoencoder may be performed without revealing to the UE 10, specifically to the encoder part of the autoencoder, what part of the latent representation is masked. This can be accomplished by applying the mask at the input of the decoder part, i.e., at the access node 100. Each mask provided by the mask generator may be checked for viability. This check may involve checking whether a reconstruction loss observed when reconstructing the CSI data from the latent representation is within an acceptable margin or not. The reconstruction loss may be assessed in terms of a loss function, e.g., a function which quantifies deviation of the reconstructed CSI data from the original CSI data. Viable masks are stored in the mask repository 330 from where they can be obtained for use during regular operation of the autoencoder. Masks that are found to be not viable may be discarded.

During regular operation, the access node 100 may select one or more masks from the mask repository 330 and communicate the selected mask(s) to the UE 10. The access node 100 may for example use RRC (Radio Resource Control) signaling to indicate the selected mask(s) to the UE 10, e.g., RRC signaling for RRC connection setup and/or for RRC connection reconfiguration. For example, RRC signaling for RRC connection setup could be used to initially indicate a mask to be applied by the UE 10. The UE 10 may then measure CSI data, encode the measured CSI data to obtain a latent representation of the CSI data, and then apply the mask to the latent representation so that only the unmasked elements of the latent representation are transmitted to the access node 100. At a later instance, RRC signaling for reconfiguration of the RRC connection may be used to adjust or replace the mask applied by the UE 10.

The mask repository 330 can be shared by multiple access nodes 100. For example, multiple access nodes 100 could have access to the same mask repository 330 so that each of the access nodes 100 could also use masks checked and stored by another access node 100. Alternatively or in addition, the access nodes 100 could communicate the masks among each other, e.g., using an inter-access node interface like the X2 interface specified for the LTE technology and the NR technology. Further, the access nodes 100 could communicate the masks via a centralized node, e.g., a CN node like the above-mentioned control node 130.

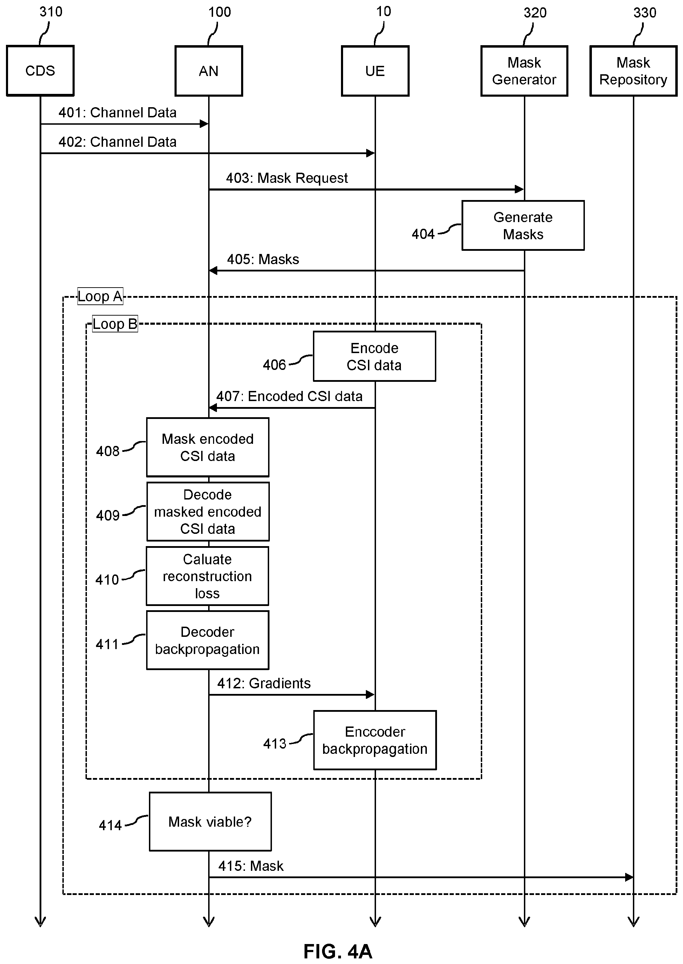

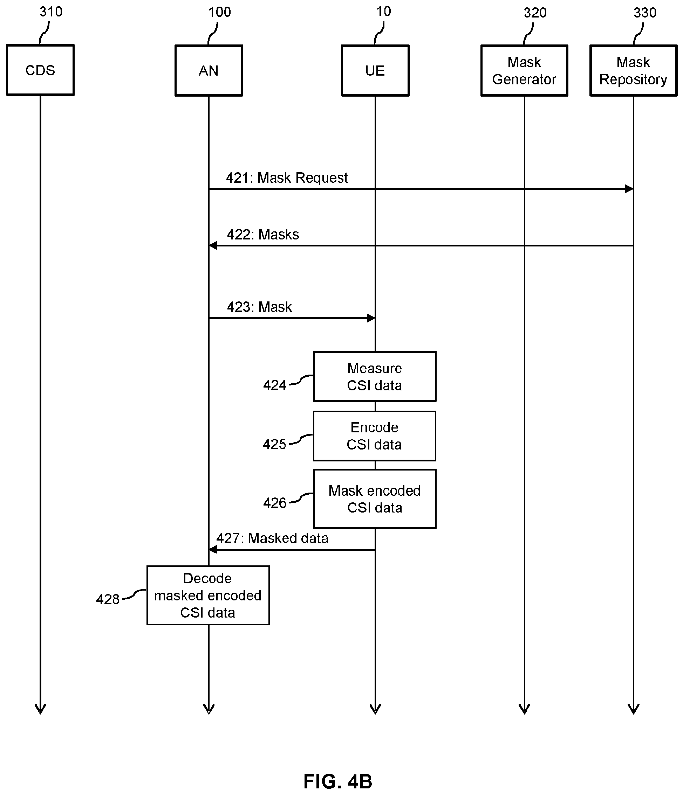

In some scenarios, training of the decoder part of the autoencoder may be enhanced by considering that the latent representation of the CSI data received by the decoder part may be subject to masking. That is to say, the training of the decoder part may aim at making the decoder part more robust to the fact that a part of the latent representation is concealed by the masking and thus not available as input when reconstructing the CSI data. Figs. 4A, 4B, and 4C illustrate an example of corresponding processes.

The processes can distinguish a training phase and an operational phase. Fig. 4A illustrates the training phase, and Fig. 4B illustrates the operational phase.

In an initial part of the training phase, the CDS 310 provides channel data to be used for the training to the access node 100 (as illustrated by message 401) and to the UE 10 (as illustrated by message 402). Here, it is noted that message 402 may actually be transmitted via the access node 100. The channel data may be organized to reflect different operational situations and conditions, e.g., corresponding to indoor scenarios, outdoor scenarios, and/or different channel conditions, e.g., as indicated by a Rank Indicator (RI).

The access node 100 then asks the mask generator 320 to generate a set of masks, by sending a mask request 403. In response to the mask request 403, the mask generator generates a set of masks, as illustrated by block 404. The masks may for example be generated based on a random process. However, more sophisticated mask generation strategies could be applied alternatively or in addition, e.g., mask generation based on geometric considerations and/or based on a specific goal. By message 405, the mask generator 320 provides the set of masks to the access node 100.

Then training is performed by iterating processes per mask of the set (Loop A) and per ML training epoch (Loop B). Within Loop B, the UE 10 encodes CSI data by the encoder part of the autoencoder, as illustrated by block 406. The UE 10 then sends the encoded CSI data by message 407 to the access node 100. This is accomplished without masking. The access node 100 then applies the currently considered mask to the received encoded CSI data, as illustrated by block 408. The mask can be regarded as a vector consisting of binary values. A binary value at element k of the mask determines if the corresponding element k of the encoded CSI data is masked or not, i.e., if it would excluded from transmission in regular operation. At block 409, the access node 100 uses the decoder part of the autoencoder to reconstruct the CSI data from the masked encoded CSI data. This reconstruction is performed taking into account the considered mask, i.e., also based on the knowledge which elements of the encoded CSI data are missing due to the masking.

At block 410, the access node 100 calculates a reconstruction loss. This may be accomplished by comparing the output of the decoder part obtained at block 409 with the original input of the encoder part. As illustrated by block 411, the access node 100 may then perform decoder backpropagation to adjust weights of the decoder, with the aim of minimizing the reconstruction loss. If also the encoder part at the UE 10 is included in the training process, the access node 100 may also calculate gradients and indicate the gradients to the UE 10, as illustrated by message 412. Based on the gradients, the UE 10 may then perform encoder backpropagation to adjust weights of the encoder, with the aim of minimizing the reconstruction loss, as illustrated by block 413. From here, Loop B may be re-iterated until the decoder part and optionally the encoder part are sufficiently trained. Then, at block 414 the access node 100 may check if the mask is viable, by checking if the reconstruction loss for this mask is below a threshold. If this is the case, as indicated by message 415, the access node 100 provides the mask to the mask repository 330, to be stored for later usage during the operational phase. If the mask repository is shared by multiple access nodes, the mask may be stored in association with an identifier of the access node 100. Further, the mask may be stored in association with one or more identifiers of an operational situation or conditions under which the mask was found to be viable, e.g., corresponding to the channel data used for the training. Otherwise, the considered mask is discarded and a further mask of the set may be considered in the next iteration of Loop A.

As illustrated in Fig. 4B, in the operational phase the access node 100 obtains one or more masks from the mask repository 330, by sending a mask request 421 to the mask repository 330. The mask request 421 may identify an operational situation or conditions under which the one or more masks are to be applied, e.g., in an indoor or outdoor scenario, type of UE, channel quality, or the like. As indicated by message 422, in response to the mask request 412, the mask repository 330 provides one or more masks that match the criteria indicated in the mask request 421. If the mask repository 330 provided multiple masks, the access node 100 may further select from these masks, e.g., based on measurements performed by the access node 100 or by the UE 10. The access node 100 then indicates the selected mask to the UE 10, as indicated by message 423.

As indicated by block 424, the UE 10 then measures CSI data for the channel between the UE 10 and the access node 100. The UE 10 then encodes CSI data by the encoder part of the autoencoder, as illustrated by block 425. At block 426, the UE 10 then applies the previously indicated mask to the encoded CSI data, and sends the masked encoded CSI data to the access node 100, as indicated by message 427. Here, the masking has the effect that the masked elements of the encoded CSI data are excluded from transmission. The masking thus reduces the amount of data that needs to conveyed by message 427. At block 428, the access node 100 uses the decoder part of the autoencoder to reconstruct the CSI data from the masked encoded CSI data. This reconstruction is performed taking into account the utilized mask, i.e., also based on the knowledge which elements of the encoded CSI data are missing due to the masking.

As mentioned above, the access node 100 may also itself have multiple masks available, from which it can select depending on operational situation or conditions. For example, such different masks could provide different levels of reconstruction loss, and in some operational situations or under certain conditions, higher reconstruction loss may be acceptable. Further, computational resources available at the access node 100 for data processing to accomplish the reconstruction, e.g., buffer size, may vary per UE 10 or in total, so that in certain operational situations or under certain conditions, usage of a mask requiring less computational resources may be preferable.

The following table illustrates an example of a mask collection organized according to different operational situations.

| Mask identifier | Situation | Mask definition | I/O ratio | Average reconstruction loss; statistical dispersion ($\sigma^2$) |
|---|---|---|---|---|
| 1 | Indoor | [0, 0, 0, 1, 0, 1........] | 80% | 0.01; 0.002 |
| 2 | Outdoor | [1, 0, 0, 1, 0.....] | 70% | 0.10; 0.0014 |

Another way to organize different masks could be based on the RI. During operation, the UE 10 typically measures RI for its wireless channel to the access node 100 and reports the measured RI to the access node 100. This may be accomplished periodically or a-periodically.

The RI may be regarded as an indication how well multiple antennas work in a MIMO (Multiple Input Multiple Output) configuration, in particular with respect to how much correlation exists between each pair of the antennas. No correlation yields the highest RI value and means no interference between the antennas, which typically results in best performance. Assuming that in the considered MIMO configuration the number of receive (Rx) antennas is the same as the number of transmit (Tx) antennas, the maximum value of the RI corresponds to the number of the Rx antennas. If the number of Tx antennas is different from the number of Rx antennas, the number of the Tx antennas limits the maximum value of the RI.

The RI may for example be reported by the UE 10 when the UE 10 requests a specific number of MIMO layers. The RI may then be included in the CSI feedback sent from UE 10 to the access node 100. By way of example, if a UE reports RI=1 (i.e., "RANK1"), this means only one spatial stream of data may be assigned to the UE 10. If the UE reports RI=2 (i.e., RANK2), two spatial streams of data may be assigned to the UE 10, corresponding to a 4x4 MIMO configuration, if the UE 10 reports RI=4, four spatial streams of data may be assigned to the UE 10, corresponding to a 4x4 MIMO configuration, and so on.

Each input to the autoencoder can be labelled according to the RI currently reported by the UE 10. In the training phase, the masks can then be collected with the aim of satisfying a desired reconstruction loss on a per RI basis. In the operational phase, the corresponding mask can be selected depending on the RI currently reported by the UE 10. If the RI changes, the UE 10 can select a new mask which matches the new value of the RI. For this purpose, the access node 100 may provide the UE 10 with a set of different masks which are mapped to different values of the RI.

As mentioned above, different masking strategies may be used as a basis for generating the masks. Such masking strategies include random generation, mask generation based on geometric considerations and/or based on a specific goal.

In the case of random mask generation, masks may be generated randomly and then assessed with respect to their viability, optionally taking into account the operational situation and/or conditions in which the mask is found to be viable. The randomly generated masks may then be classified according to the operational situation and/or conditions in which they were found to be viable. For example, if a mask was found to be viable in an indoor environment, it may be classified accordingly. Similarly, if a mask was found to be viable in an outdoor environment, it may be classified accordingly. Further, the masks may be classified based on the RI for which they are found to be viable.

The above classification may be automated, e.g., using processes as explained in connection with Fig. 4A, starting with channel data which are labeled according to different operational situations and/or conditions and resulting in masks which are classified according to the operational situations and/or conditions in which they are viable. Alternatively, the classification of masks could be semi-supervised, e.g., by using a clustering approach to determine different families of latent spaces. Here, a latent space family may constitute a set of latent spaces where the representations of the elements of different latent spaces of the set are close to each other. K-means or similar clustering techniques may be used to assess whether the elements are close to each other and to determine the clusters and then classify the masks according to the clusters. The above-described training processes could then be performed per cluster.

In the case of mask generation based on geometric considerations, the latent space can be split into different geometrical spaces, and the masks may be defined based on these geometrical spaces. Specifically, the unmasked elements and the masked elements may correspond to different geometrical spaces, and the mask may define that one or more of the geometrical spaces are masked and one or more others of the geometrical spaces are unmasked. A possible example is to split a 3-dimensional input data space of the CSI data into non-overlapping cuboids. The elements which are masked and the elements which are unmasked could the correspond to or be defined based on the cuboids. Based on the geometrical considerations, the search space for viable masks can be reduced by limiting the search to one or more geometrical shapes for splitting the latent spaces, e.g., to cubes, rectangular cuboids, non-rectangular cuboids, prisms, or the like.

In addition or as an alternative, the latent space may be split based on one or more dimensions of the latent space. For example, in the case of a 3-dimensional latent space, two out of three dimensions could be defined as being masked, while the other is defined as being unmasked. This may be combined with other masking strategies, e.g., with splitting into geometrical. For example, at a certain position of the latent space, e.g., corresponding to a geometrical shape, one or more dimensions can be defined as masked while the other dimensions are unmasked.

As already indicated above, the different masking strategies may be combined. For example, one or more geometrical shapes may be used to define subspaces of the latent space that are unmasked. Within the remaining subspace(s), which may also be defined by one or more geometrical shapes, one or more dimensions may be defined as unmasked, and for the other dimension(s) one or more elements may be randomly set as unmasked or masked.

In some scenarios, the masking strategy may also be based on currently observed or predicted computational load at the access node 100. This can be beneficial because the computations for reconstruction of the CSI data are performed by the access node 100. An exemplary algorithm for selection of the masking strategy could be as follows:

Step 1: Get current or predicted load L. The predicted load L could for example consider an upcoming time interval of T minutes) load L. The load L can be based on performance monitoring counters of the access node 100, such as throughput-capacity ratio, current number of active UEs, total number of served UEs, energy consumption, or the like.
Step 2: Identify potential number of combinations using a binomial coefficient based on the load L. For example, if x denotes the size of the latent space and n denotes the potential number of choices for the mask, k over x may be chosen, where k is a decreasing function of the load L.
Step 3: Geometrically segment the latent space in k subspaces, e.g., based on geometrical shapes and/or dimensions as mentioned above.
Step 4: Construct an experience matrix, e.g., as in the example of the above table based on assessing masks defined based on the segmentation. Based on the experience matrix, a mask can be selected that provides sufficient compression and has acceptable reconstruction loss.

The choice of masking strategy may apply to the complete generation mask or only to certain parts of mask generation, e.g., to the identification of the potential number of combinations using the binomial coefficient (step 2) or to the geometric segmentation, e.g., deciding whether to segment based on geometric shapes in combination with masking of dimensions (step 2) or to segment without masking of dimensions (step 3).

In the case of a goal-based masking strategy, the masking may be considered jointly with requirements of radio scheduling. Specifically, a goal can be defined in terms of a compression ratio achieved by the masking. Criteria for defining the goal may include: characteristics of the data to be masked, e.g., volume; required level of accuracy of the reported CSI data; availability of bandwidth for transmission of the CSI data, also taking into account other transmissions which may have higher priority; and intent of the system for the considered RAN segment. These criteria may be used individually or in combination to decide on the goal, e.g., whether to increase or decrease the compression ratio to be achieved by the masking.

To illustrate a possible algorithm, the following definitions may be used:

- Latent volume *(LV)* is defined as the number of bits required for transmitting an upcoming batch of masked latent representations of CSI data, corresponding to specific CSI report occasion.
- Target Masking Ratio *(TMR)* is defined as the number bits to be masked, normalized to the LV.
- Impact of Masking *(IM)* is defined as a value in the range of 0 to 1 that reflects the loss of accuracy of the reconstructed CSI data due to the masking operation. A higher value of *IM* corresponds to a lower the risk that the masking will have adverse effects. Accordingly, a higher value of IM should typically result in lower *TMR*.
- Bandwidth availability (*BA*) is defined as a value in the range of 0 to 1 that reflects the availability of bandwidth, in total and per individual UE associated with the access node 100. A higher value of *BA* means that more bandwidth is available for transmission of the masked CSI data, so that a lower value of *TMR* may be sufficient, while for a higher value of *BA a* higher value of *TMR* is needed.

System Intent impact on masking ratio (*SInM*) is defined as a value in the range of 0 to 1 that reflects impact of system intent. For example, there may be an intent of better throughput, which may require better interference avoidance, which may in turn require higher CSI accuracy. This intent should typically result in a lower value of *TMR*. In another example, there may be an intent of better energy efficiency, which may require a lower amount of data to be signaled. This intent should typically result in a higher value of *TMR*. For a number of different intents, *SInM* may thus be defined as:

$$SInM = \sum_{i \in Intent} w_i * InM_i, \tag{1}$$

where $InM_i$ is the impact of intent with index *i* impact on masking ratio, and $w_i$ is a corresponding weight.

As mentioned above, different intents can require either increasing or decreasing of *TMR*. This can be taken into account by splitting *SInM* into a first contribution with increasing impact on *TMR,* denoted as *SInM_Inc*, and a second contribution with decreasing impact on *TMR* , denoted as *SInM_dec.*

With the above definitions, TMR can be calculated according to:

$$\text{TMR} = w_{IM} \frac{1}{IM} + w_{SInM} \frac{SInM_{Inc}}{SInM_{dec}} + w_{BA} \frac{1}{BA}, \tag{2}$$

where $w_{IM}$ is a weight assigned to the effect of *IM,* $w_{SInM}$ is a weight assigned to the effect of *SInM,* and $w_{BA}$ is a weight assigned to the effect of *BA.*

The calculation may be performed by the access node 100 and/or by the UE 10. If the UE 10 is involved in the calculation, the access node 100 may provide information to be used in the calculation to the UE 10, e.g., at least a part of *SInM, BA,* and/or *IM.* The UE 10 may use this information together with locally available parameters to calculate *TMR* and then select a mask depending on the calculated value of *TMR.*

Updating of *TMR* and/or of values used for calculating *TMR* can be accomplished for each PDU (Packet Data Unit) session and/or in an event-based manner, e.g., in response to a drop in CSI data accuracy or in response to changes of the CSI data that exceed a threshold. Further, updating of *TMR* and/or of values used for calculating *TMR* could be accomplished in a periodic manner.

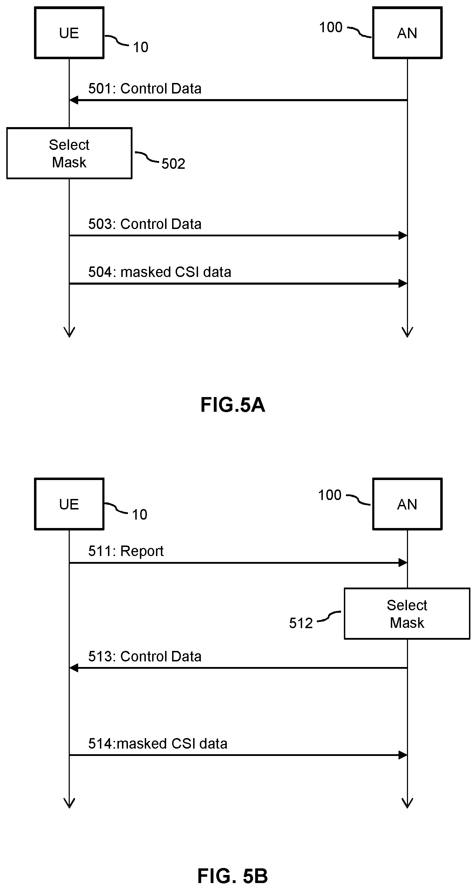

Figs. 5A and 5B illustrate examples of processes how selection of the mask to be applied by the UE 10 may be accomplished in the operational phase.

In the example of Fig. 5A, the access node 100 provides control data 501 to the UE 10, e.g., by RRC signaling. The control data 501 indicates a set of masks. The access node 100 may have obtained such masks from the mask repository 330 and/or may have locally generated such masks. The masks indicated by the control data 501 may also be based on a preselection by the access node 100, e.g., based on a type of the UE 10, based on the operational situation, e.g., whether the UE 10 operates in an indoor environment or an outdoor environment, and/or based on conditions observed or predicted by the access node 100, e.g., computational load of the access node, available bandwidth, or the like.

As illustrated by block 502, the UE 10 then selects a mask based on the control data 501 provided by the access node 100. The selection may be based on a type of the UE 10, based on the operational situation, e.g., whether the UE 10 operates in an indoor environment or an outdoor environment. The selection may also be based on other information locally observed or otherwise available at the UE 10, e.g., RI, characteristics of the CSI data to be transmitted by the UE 10. For example, the UE 10 could observe an abrupt change in the CSI data measured by the UE 10 and select the mask in response to the detected change.

As further indicated, the UE 10 may then also provide control data 503 to the access node 100, e.g., by RRC signaling. The control data 503 may indicate the mask selected by the UE 10, so that the decoder part of the autoencoder is made aware of the masking performed by the UE 10. The UE 10 then applies the selected mask when transmitting CSI data to the access node 100, as indicated by message 504.

In the example of Fig. 5B, the UE 10 provides a report 511 to access node 100, e.g., by RRC signaling. The report 511 may indicate various information observed by the UE 10, e.g., whether the UE 10 operates in an indoor environment or an outdoor environment, RI, or characteristics of the CSI data to be transmitted by the UE 10.

As illustrated by block 512, the access node 100 then selects a mask. The selection may be from a set of masks that the access node 100 obtained from the mask repository 330 and/or locally generated by the access node 100. The selection may be based on the report 511 provided by the UE 10. The selection may be based on a type of the UE 10, based on the operational situation, e.g., whether the UE 10 operates in an indoor environment or an outdoor environment, based on RI, based on characteristics of the CSI data to be transmitted by the UE 10, and/or based on conditions observed or predicted by the access node 100, e.g., computational load of the access node, available bandwidth, or the like. based on characteristics of the CSI data to be transmitted by the UE 10.

The access node 100 then provides control data 513 to the UE 10, e.g., by RRC signaling. The control data 513 indicates a masks to be applied by the UE 10 when transmitting CSI data. The UE 10 then applies the selected mask when transmitting CSI data to the access node 100, as indicated by message 514.

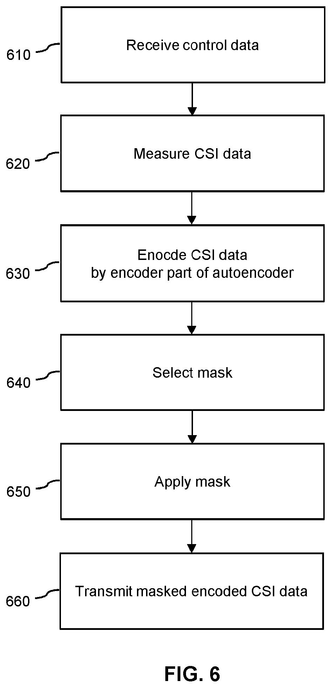

Fig. 6 shows a flowchart for illustrating a method, which may be utilized for implementing the illustrated concepts. The method of Fig. 6 may be used for implementing the illustrated concepts in a wireless device which communicates via a wireless channel with a node of a wireless communication network. The node may correspond to one of the above-mentioned access nodes 100, and the wireless device may correspond to one of the above-mentioned UEs 10.

If a processor-based implementation of the wireless device is used, at least some of the steps of the method of Fig. 6 may be performed and/or controlled by one or more processors of the wireless device. Such wireless device may also include a memory storing program code for implementing at least some of the below described functionalities or steps of the method of Fig. 6.

At step 610, the wireless device may receive control data. The wireless device may receive the control data from a node of the wireless communication network, e.g., one of the above-mentioned access nodes 100. The wireless device may receive the control data via RRC signaling.

At step 620, the wireless device measures CSI data for the wireless channel between the wireless device and the node. The CSI data may for example represent coefficients of a MIMO channel matrix of the wireless channel.

At step 630, the wireless device encodes the CSI data by an encoder part of an ML-based autoencoder. The encoder part of the autoencoder may be jointly trained with a decoder part of the autoencoder, which is applied at the node to reconstruct the CSI data. The decoder part of the autoencoder may be optimized based on the mask.

At step 640, the wireless device may select a mask. The selection of the mask may be based on the control data received at step 610 and/or on information locally observed or otherwise available at the wireless device. For example, the control data may include a definition of a set of one or more masks, and the wireless device may select the mask from this set. Further, the control data could directly indicate the mask to be applied by the wireless device. In addition or as an alternative, the wireless device may select the mask based on operating conditions of the wireless device, based on an RI of the wireless channel, based on type of the wireless device, and/or based on a quality level for reconstruction of the CSI data from the encoded CSI data. In some scenarios, the wireless device may also indicate the selected mask to the node, e.g., as explained in the example of Fig. 5A.

At step 650, the wireless device applies a mask to the CSI data encoded at step 630, e.g., the mask selected at step 640. The mask defines unmasked data elements and masked elements of the encoded CSI data.

In some scenarios, the encoded CSI data may be defined in a multi-dimensional data space. In such scenarios, the unmasked data elements of the encoded CSI data may correspond to one or more first geometrical subspaces of the data space, while the masked data elements of the encoded CSI data correspond to one or more second geometrical subspaces of the data space. The first and second geometrical subspaces may be non-overlapping. In addition or as an alternative, the unmasked data elements of the encoded CSI data may correspond to one or more first dimensions of the data space, while the masked data elements of the encoded CSI data correspond to one or more second dimensions of the data space.

At step 660, the wireless device transmits the masked encoded CSI data to the node, i.e., the encoded CSI data excluding the masked data elements. During training of the autoencoder, the wireless device may transmit the encoded CSI data without applying a mask, e.g., as explained in connection with Fig. 4A.

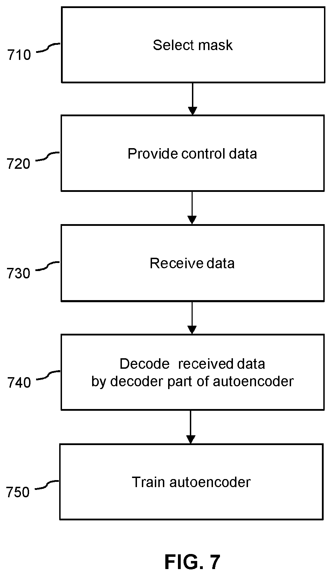

Fig. 7 shows a flowchart for illustrating a method, which may be utilized for implementing the illustrated concepts. The method of Fig. 7 may be used for implementing the illustrated concepts in a node of the wireless communication network which communicates via a wireless channel with a wireless device. The node may correspond to one of the above-mentioned access nodes 100, and the wireless device may correspond to one of the above-mentioned UEs 10.

If a processor-based implementation of the node is used, at least some of the steps of the method of Fig. 7 may be performed and/or controlled by one or more processors of the node. Such node may also include a memory storing program code for implementing at least some of the below described functionalities or steps of the method of Fig. 7.

At step 710, the node may select one or more masks to be applied by the wireless device for masking encoded CSI data. The selection of the mask may be based on a report received from the wireless device, e.g., as explained in the example of Fig. 5B. Alternatively or in addition, the selection may be based on information locally observed, predicted, or otherwise available at the node. The node may select the mask(s) based on operating conditions of the wireless device, based on an RI of the wireless channel between the node and the wireless device, based on type of the wireless device, and/or based on a quality level for reconstruction of the CSI data. In some scenarios, the node may also receive an indication of a selected mask from the wireless device, e.g., as explained in the example of Fig. 5A.

At step 720, the node may provide control data for selection of a mask to the wireless device. The node may provide the control data via RRC signaling. For example, the control data may include a definition of a set of one or more masks, and the wireless device may select the mask from this set. Further, the control data could directly indicate the mask to be applied by the wireless device.

At step 730, the node receives data representing CSI data from the wireless device. The CSI data are measured by the wireless device and encoded at the wireless device by an encoder part of an ML-based autoencoder. The CSI data relate to the wireless channel between the wireless device and the node. The CSI data may for example represent coefficients of a MIMO channel matrix of the wireless channel.

At step 740, the node decodes the received data by a decoder part of the machine-learning based autoencoder, taking into account that at the wireless device a mask was applied to the encoded CSI data, the mask defining unmasked data elements and masked elements of the encoded CSI data, and that the received data exclude the masked data elements. The decoder part of the autoencoder may be optimized based on the mask. An encoder part of the autoencoder, applied at the wireless device to encode the CSI data, may be jointly trained with the decoder part of the autoencoder.

In some scenarios, the encoded CSI data may be defined in a multi-dimensional data space. In such scenarios, the unmasked data elements of the encoded CSI data may correspond to one or more first geometrical subspaces of the data space, while the masked data elements of the encoded CSI data correspond to one or more second geometrical subspaces of the data space. The first and second geometrical subspaces may be non-overlapping. In addition or as an alternative, the unmasked data elements of the encoded CSI data may correspond to one or more first dimensions of the data space, while the masked data elements of the encoded CSI data correspond to one or more second dimensions of the data space.

At step 750, the node may train the autoencoder. Here, it is noted that such training of the autoencoder may actually precede steps 710 to 740. However, such training could also have the purpose of re-training or further training the autoencoder after or during an operational phase.

During training of the autoencoder, the node may receive training data encoded by the encoder part of the autoencoder and transmitted without applying a mask, e.g., as explained in connection with Fig. 4A. The node may apply a plurality of candidate masks to the received training data, each candidate mask defining unmasked data elements and masked elements of the encoded CSI data. For each of the candidate masks, the node may evaluate performance of the decoder part of the autoencoder. Based on the evaluated performance, the node may store one or more of the candidate masks in a mask repository for selection of the mask to be applied by the wireless device, e.g., in the mask repository 330. The mask repository may be shared with other nodes of the wireless communication network. Further, at least a part of the mask repository could be provided locally at the node. The candidate masks may be generated based on randomly determining one or more of the masked data elements and/or by randomly determining one or more of the unmasked data elements. If the encoded CSI data are defined in a multi-dimensional data space, the candidate masks may also generated based on geometrical subspaces of the data space and/or based on dimensions of the data space. In some scenarios, the masks stored in the mask repository may be classified according to operational conditions of the wireless device and/or according to RI of the wireless channel.

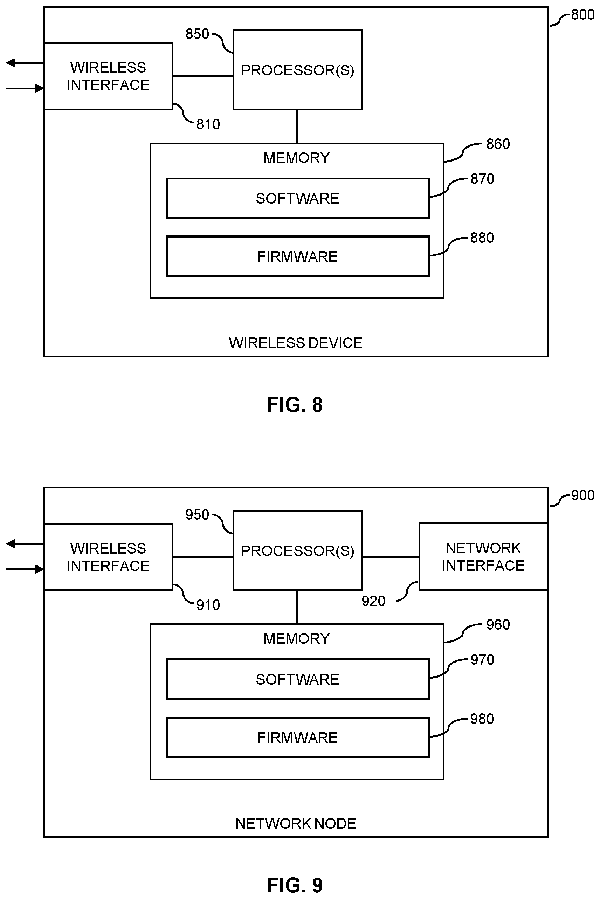

Fig. 8 schematically illustrates a processor-based implementation of a wireless device 800 for operation in a wireless communication network, which may be used for implementing the above-described concepts. For example, the structures as illustrated in Fig. 8 may be used for implementing the concepts in one or more of the above-mentioned UEs 10.

As illustrated, the wireless device 800 may include a wireless interface 810. The wireless interface 810 may be used for wireless communication with one or more nodes of the wireless communication network, such as the above-mentioned access nodes 100.

Further, the wireless device 800 may include one or more processors 850 coupled to the wireless interface 810 and a memory 860 coupled to the processor(s) 850. By way of example, the wireless interface 810, the processor(s) 850, and the memory 860 could be coupled by one or more internal bus systems of the wireless device 800. The memory 860 may include a read-only memory (ROM), e.g., a flash ROM, a random-access memory (RAM), e.g., a dynamic RAM (DRAM) or static RAM (SRAM), a mass storage, e.g., a hard disk or solid state disk, or the like. As illustrated, the memory 860 may include software 870 and/or firmware 880. The memory 860 may include suitably configured program code to be executed by the processor(s) 850 so as to implement the above-described functionalities for controlling wireless communication, such as explained in connection with Fig. 6.

It is to be understood that the structures as illustrated in Fig. 8 are merely schematic and that the wireless device 800 may actually include further components which, for the sake of clarity, have not been illustrated, e.g., further interfaces or further processors. Also, it is to be understood that the memory 860 may include further program code for implementing known functionalities of a UE supporting the NR technology or the LTE technology. According to some embodiments, also a computer program may be provided for implementing functionalities of the wireless device 800, e.g., in the form of a physical medium storing the program code and/or other data to be stored in the memory 860 or by making the program code available for download or by streaming.

Fig. 9 schematically illustrates a processor-based implementation of a node 900 for a wireless communication network, which may be used for implementing the above-described concepts. For example, the structures as illustrated in Fig. 9 may be used for implementing the concepts in one or more of the above-mentioned access nodes 100.

As illustrated, the node 900 may include a wireless interface 910 and a network interface 920. The wireless interface 910 may be used for wireless communication with one or more wireless device, such as the above-mentioned UEs 10. The network interface 920 may be used for communication with one or more other nodes of the wireless communication network, e.g., other access nodes or CN nodes.

Further, the node 900 may include one or more processors 950 coupled to the interfaces 910, 920 and a memory 960 coupled to the processor(s) 950. By way of example, the interfaces 910, 920, the processor(s) 950, and the memory 960 could be coupled by one or more internal bus systems of the node 900. The memory 960 may include a ROM, e.g., a flash ROM, a RAM, e.g., a DRAM or SRAM, a mass storage, e.g., a hard disk or solid state disk, or the like. As illustrated, the memory 960 may include software 970 and/or firmware 980. The memory 960 may include suitably configured program code to be executed by the processor(s) 950 so as to implement the above-described functionalities for controlling wireless communication, such as explained in connection with Fig. 7.

It is to be understood that the structures as illustrated in Fig. 9 are merely schematic and that the node 900 may actually include further components which, for the sake of clarity, have not been illustrated, e.g., further interfaces or further processors. Also, it is to be understood that the memory 960 may include further program code for implementing known functionalities of a gNB of the NR technology, an eNB of the LTE technology, or similar type of access node. According to some embodiments, also a computer program may be provided for implementing functionalities of the node 900, e.g., in the form of a physical medium storing the program code and/or other data to be stored in the memory 960 or by making the program code available for download or by streaming.

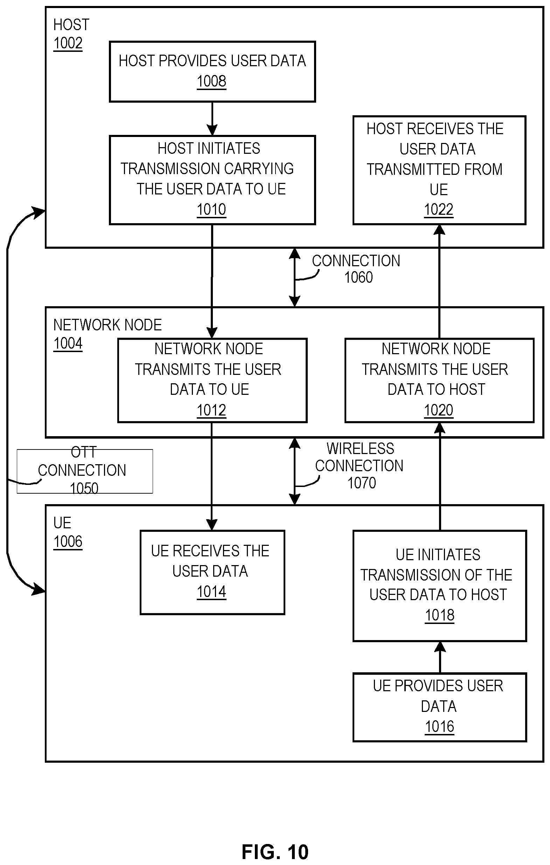

Fig. 10 shows a communication diagram of a host 1002 communicating via a network node 1004 with a UE 1006 over a partially wireless connection in accordance with some embodiments. Example implementations, in accordance with various embodiments, of the UE (such as one of the above-mentioned UEs 10), network node (such as one of the above-mentioned access nodes 100), and host (such as the above-mentioned service platform 150 or application server(s) 180) will now be described with reference to Fig. 10.

Embodiments of host 1002 include hardware, such as a communication interface, processing circuitry, and memory. The host 1002 also includes software, which is stored in or accessible by the host 1002 and executable by the processing circuitry. The software includes a host application that may be operable to provide a service to a remote user, such as the UE 1006 connecting via an over-the-top (OTT) connection 1050 extending between the UE 1006 and host 1002. In providing the service to the remote user, a host application may provide user data which is transmitted using the OTT connection 1050.

The network node 1004 includes hardware enabling it to communicate with the host 1002 and UE 1006. The connection 1060 may be direct or pass through a core network (like core network 110 of Fig. 2) and/or one or more other intermediate networks, such as one or more public, private, or hosted networks. For example, an intermediate network may be a backbone network or the Internet.

The UE 1006 includes hardware and software, which is stored in or accessible by UE 1006 and executable by the UE's processing circuitry. The software includes a client application, such as a web browser or operator-specific "app" that may be operable to provide a service to a human or non-human user via UE 1006 with the support of the host 1002. In the host 1002, an executing host application may communicate with the executing client application via the OTT connection 1050 terminating at the UE 1006 and host 1002. In providing the service to the user, the UE's client application may receive request data from the host's host application and provide user data in response to the request data. The OTT connection 1050 may transfer both the request data and the user data. The UE's client application may interact with the user to generate the user data that it provides to the host application through the OTT connection 1050.

The OTT connection 1050 may extend via a connection 1060 between the host 1002 and the network node 1004 and via a wireless connection 1070 between the network node 1004 and the UE 1006 to provide the connection between the host 1002 and the UE 1006. The connection 1060 and wireless connection 1070, over which the OTT connection 1050 may be provided, have been drawn abstractly to illustrate the communication between the host 1002 and the UE 1006 via the network node 1004, without explicit reference to any intermediary devices and the precise routing of messages via these devices.

As an example of transmitting data via the OTT connection 1050, in step 1008, the host 1002 provides user data, which may be performed by executing a host application. In some embodiments, the user data is associated with a particular human user interacting with the UE 1006. In other embodiments, the user data is associated with a UE 1006 that shares data with the host 1002 without explicit human interaction. In step 1010, the host 1002 initiates a transmission carrying the user data towards the UE 1006. The host 1002 may initiate the transmission responsive to a request transmitted by the UE 1006. The request may be caused by human interaction with the UE 1006 or by operation of the client application executing on the UE 1006. The transmission may pass via the network node 1004, in accordance with the teachings of the embodiments described throughout this disclosure. Accordingly, in step 1012, the network node 1004 transmits to the UE 1006 the user data that was carried in the transmission that the host 1002 initiated, in accordance with the teachings of the embodiments described throughout this disclosure. In step 1014, the UE 1006 receives the user data carried in the transmission, which may be performed by a client application executed on the UE 1006 associated with the host application executed by the host 1002.

In some examples, the UE 1006 executes a client application which provides user data to the host 1002. The user data may be provided in reaction or response to the data received from the host 1002. Accordingly, in step 1016, the UE 1006 may provide user data, which may be performed by executing the client application. In providing the user data, the client application may further consider user input received from the user via an input/output interface of the UE 1006. Regardless of the specific manner in which the user data was provided, the UE 1006 initiates, in step 1018, transmission of the user data towards the host 1002 via the network node 1004. In step 1020, in accordance with the teachings of the embodiments described throughout this disclosure, the network node 1004 receives user data from the UE 1006 and initiates transmission of the received user data towards the host 1002. In step 1022, the host 1002 receives the user data carried in the transmission initiated by the UE 1006.

The illustrated concepts may help to improve performance of OTT services provided to the UE 1006 using the OTT connection 1050, in which the wireless connection 1070 forms the last segment. More precisely, the teachings of these embodiments may improve the efficiency of signaling CSI data and thereby allow for more precisely and efficiently controlling data transfers on the last segment of the OTT connection 1050.

In an example scenario, factory status information may be collected and analyzed by the host 1002. As another example, the host 1002 may process audio and video data which may have been retrieved from a UE for use in creating maps. As another example, the host 1002 may collect and analyze real-time data to assist in controlling vehicle congestion (e.g., controlling traffic lights). As another example, the host 1002 may store surveillance video uploaded by a UE. As another example, the host 1002 may store or control access to media content such as video, audio, VR or AR which it can broadcast, multicast or unicast to UEs. As other examples, the host 1002 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 1050 between the host 1002 and UE 1006, in response to variations in the measurement results. The measurement procedure and/or the network functionality for reconfiguring the OTT connection may be implemented in software and hardware of the host 1002 and/or UE 1006. In some embodiments, sensors (not shown) may be deployed in or in association with other devices through which the OTT connection 1050 passes; the sensors may participate in the measurement procedure by supplying values of the monitored quantities exemplified above, or supplying values of other physical quantities from which software may compute or estimate the monitored quantities. The reconfiguring of the OTT connection 1050 may include message format, retransmission settings, preferred routing etc.; the reconfiguring need not directly alter the operation of the network node 1004. Such procedures and functionalities may be known and practiced in the art. In certain embodiments, measurements may involve proprietary UE signaling that facilitates measurements of throughput, propagation times, latency and the like, by the host 1002. The measurements may be implemented in that software causes messages to be transmitted, in particular empty or 'dummy' messages, using the OTT connection 1050 while monitoring propagation times, errors, etc.

As can be seen, the concepts as described above may be used for efficiently managing usage of an autoencoder for conveying CSI data. In particular, by masking the encoded CSI data, the amount of data that needs to signaled can be further reduced.

It is to be understood that the examples and embodiments as explained above are merely illustrative and susceptible to various modifications. For example, the illustrated concepts may be applied in connection with various kinds of wireless communication technologies, without limitation to a technology specified by 3GPP, e.g., to WLAN technology. Further, the illustrated concepts may be applied for ML-based encoding and decoding of various kinds of CSI data, without limitation to specific formats of CSI data specified by 3GPP. Moreover, it is to be understood that the above concepts may be implemented by using correspondingly designed software to be executed by one or more processors of an existing device or apparatus, or by using dedicated device hardware. Further, it should be noted that the illustrated nodes, apparatuses or devices may each be implemented as a single device or as a system of multiple interacting devices or modules, e.g., based on virtualized cloud components.

## Claims

1. A method of controlling wireless communication in a wireless communication network, the method comprising:

   a wireless device (10; 800; 1006) measuring channel state information, CSI, data for a wireless channel between the wireless device (10; 800; 1006) and a node (100; 900; 1004) of the wireless communication network;
   the wireless device (10; 800; 1006) encoding the CSI data by an encoder part of a machine-learning based autoencoder;

**characterized by**:

the wireless device (10; 800; 1006) applying a mask to the encoded CSI data, the mask defining unmasked data elements and masked elements of the encoded CSI data; and

the wireless device (10; 800; 1006) transmitting the encoded CSI data excluding the masked data elements to the node (100; 900; 1004).

2. The method according to claim 1,
wherein a decoder part of the autoencoder, which is applied at the node to reconstruct the CSI data from the unmasked data elements of the encoded CSI data, is optimized based on the mask.

3. The method according to claim 1 or 2, comprising:
the wireless device (10; 800; 1006) selecting the mask based on control data received from the node (100; 900; 1004), wherein the control data includes a definition of a set of one or more masks, further wherein the control data indicates the mask to be applied by the wireless device (10; 800; 1006).

4. The method according to any one of the preceding claims, comprising:
the wireless device (10; 800; 1006) selecting the mask based on at least one of:

operating conditions of the wireless device (10; 800; 1006);
a rank indicator of the wireless channel;
type of the wireless device (10; 800; 1006); and
a quality level for reconstruction of the CSI data from the encoded CSI data.

5. The method according to any one of claims 3 to 4,
wherein the wireless device (10; 800; 1006) indicates the selected mask to the node.

6. The method according to any one of the preceding claims,

wherein the encoded CSI data are defined in a multi-dimensional data space; and
wherein the unmasked data elements of the encoded CSI data correspond to one or more first geometrical subspaces of the data space and the masked data elements of the encoded CSI data correspond to one or more second geometrical subspaces of the data space.

7. The method according to any one of the preceding claims,

wherein the encoded CSI data are defined in a multi-dimensional data space; and
wherein the unmasked data elements of the encoded CSI data correspond to one or more first dimensions of the data space and the masked data elements of the encoded CSI data correspond to one or more second dimensions of the data space.

8. The method according to any one of the preceding claims, comprising:
during training of the autoencoder, the wireless device (10; 800; 1006) transmitting the encoded CSI data without applying a mask.

9. A method of controlling wireless communication in a wireless communication network, the method comprising:
for a wireless channel between a wireless device (10; 800; 1006) and a node (100; 900; 1004) of the wireless communication network, the node (100; 900; 1004) receiving data representing Channel State Information, CSI, data measured by the wireless device (10; 800; 1006) and encoded at the wireless device (10; 800; 1006) by an encoder part of a machine-learning based autoencoder; and **characterized by**:
the node (100; 900; 1004) decoding the received data by a decoder part of the machine-learning based autoencoder, taking into account that at the wireless device (10; 800; 1006) a mask was applied to the encoded CSI data, the mask defining unmasked data elements and masked elements of the encoded CSI data, and that the received data exclude the masked data elements.

10. The method according to claim 9,
wherein the decoder part of the autoencoder is optimized based on the mask.

**11.** The method according to claim 9 or 10, comprising:
the node (100; 900; 1004) providing control data for selection of the mask to the wireless device, wherein the control data includes a definition of a set of one or more masks, further wherein the control data indicates the mask to be applied by the wireless device (10; 800; 1006).

**12.** A wireless device (10; 800; 1006) for operation in a wireless communication network, the wireless device (10; 800; 1006) being configured to:

- measure channel state information, CSI, data for a wireless channel between the wireless device (10; 800; 1006) and a node (100; 900; 1004) of the wireless communication network;
- encode the CSI data by an encoder part of a machine-learning based autoencoder;

**characterized by** the wireless device (10;800;1006) being further configured to:

- apply a mask to the encoded CSI data, the mask defining unmasked data elements and masked elements of the encoded CSI data; and
- transmit the encoded CSI data excluding the masked data elements to the node (100; 900; 1004).

**13.** The wireless device (10; 800; 1006) according to claim 12,
wherein the wireless device (10; 800; 1006) is configured to perform a method according to any one of claims 2 to 8.

**14.** A node (100; 900; 1004) for a wireless communication network, the node (100; 900; 1004) being configured to:

- for a wireless channel between a wireless device (10; 800; 1006) and the node (100; 900; 1004), receive data representing Channel State Information, CSI, data measured by the wireless device (10; 800; 1006) and encoded at the wireless device (10; 800; 1006) by an encoder part of a machine-learning based autoencoder; and **characterized by** the node (100,900,1004) being further configured to:

- decode the received data by a decoder part of the machine-learning based autoencoder, taking into account that at the wireless device (10; 800; 1006) a mask was applied to the encoded CSI data, the mask defining unmasked data elements and masked elements of the encoded CSI data, and that the received data exclude the masked data elements.

**15.** The node (100; 900; 1004) according to claim 14,
wherein the node (100; 900; 1004) is configured to perform a method according to any one of claims 9 to 11.

**Patentansprüche**

**1.** Verfahren zur Steuerung von Drahtloskommunikation in einem Drahtloskommunikationsnetzwerk, wobei das Verfahren umfasst, dass:

eine drahtlose Vorrichtung (10; 800; 1006) Kanalzustandsinformationsdaten, CSI-Daten, für einen Drahtloskanal zwischen der drahtlosen Vorrichtung (10; 800; 1006) und einem Knoten (100; 900; 1004) des Drahtloskommunikationsnetzwerks misst;
die drahtlose Vorrichtung (10; 800; 1006) die CSI-Daten durch einen Encoder-Teil eines auf maschinellem Lernen basierenden Autoencoders codiert;
**dadurch gekennzeichnet, dass**:

die drahtlose Vorrichtung (10; 800; 1006) eine Maske auf die codierten CSI-Daten anwendet, wobei die Maske unmaskierte Datenelemente und maskierte Elemente der codierten CSI-Daten definiert; und
die drahtlose Vorrichtung (10; 800; 1006) die codierten CSI-Daten unter Ausschluss der maskierten Datenelemente an den Knoten (100; 900; 1004) sendet.

**2.** Verfahren nach Anspruch 1,
wobei ein Decoder-Teil des Autoencoders, der an dem Knoten angewendet wird, um die CSI-Daten aus den unmaskierten Datenelementen der codierten CSI-Daten wiederherzustellen, basierend auf der Maske optimiert wird.

**3.** Verfahren nach Anspruch 1 oder 2, umfassend, dass:
die drahtlose Vorrichtung (10; 800; 1006) die Maske basierend auf Steuerdaten auswählt, die von dem Knoten (100; 900; 1004) empfangen werden, wobei die Steuerdaten eine Definition eines Satzes einer oder mehrerer Masken umfassen, wobei ferner die Steuerdaten die Maske angeben, die von der drahtlosen Vorrichtung (10; 800; 1006) angewendet werden soll.

**4.** Verfahren nach einem der vorhergehenden Ansprüche, umfassend, dass:
die drahtlose Vorrichtung (10; 800; 1006) die Maske basierend auf mindestens einem von Folgenden auswählt:

Betriebsbedingungen der drahtlosen Vorrichtung (10; 800; 1006);
einem Rang-Indikator des Drahtloskanals;
einem Typ der drahtlosen Vorrichtung (10, 800, 1006) und
einem Qualitätsniveau zur Wiederherstellung der CSI-Daten aus den codierten CSI-Daten.

**5.** Verfahren nach einem der Ansprüche 3 bis 4,
wobei die drahtlose Vorrichtung (10; 800; 1006) dem Knoten die ausgewählte Maske angibt.

**6.** Verfahren nach einem der vorhergehenden Ansprüche,

wobei die codierten CSI-Daten in einem mehrdimensionalen Datenraum definiert sind; und
wobei die unmaskierten Datenelemente der codierten CSI-Daten einem oder mehreren ersten geometrischen Teilräumen des Datenraums entsprechen und die maskierten Daten der codierten CSI-Daten einem oder mehreren zweiten geometrischen Teilräumen des Datenraums entsprechen.

**7.** Verfahren nach einem der vorhergehenden Ansprüche,

wobei die codierten CSI-Daten in einem mehrdimensionalen Datenraum definiert sind; und
wobei die unmaskierten Datenelemente der codierten CSI-Daten einer oder mehreren ersten Dimensionen des Datenraums entsprechen und die maskierten Daten der codierten CSI-Daten einer oder mehreren zweiten Dimensionen des Datenraums entsprechen.

**8.** Verfahren nach einem der vorhergehenden Ansprüche, umfassend, dass:
die drahtlose Vorrichtung (10; 800; 1006) die codierten CSI-Daten während des Trainings des Autoencoders ohne Anwenden einer Maske sendet.

**9.** Verfahren zur Steuerung von Drahtloskommunikation in einem Drahtloskommunikationsnetzwerk, wobei das Verfahren umfasst, dass:
für einen Drahtloskanal zwischen einer drahtlosen Vorrichtung (10; 800; 1006) und einem Knoten (100; 900; 1004) des Drahtloskommunikationsnetzwerks der Knoten (100; 900; 1004) Daten empfängt, die Kanalzustandsinformationsdaten, CSI-Daten, darstellen, die durch die drahtlose Vorrichtung (10; 800; 1006) gemessen und an der drahtlosen Vorrichtung (10; 800; 1006) durch einen Encoder-Teil eines auf maschinellem Lernen basierenden Autoencoders codiert wurden; und **dadurch gekennzeichnet, dass**:
der Knoten (100; 900; 1004) die empfangenen Daten durch einen Decoder-Teil des auf maschinellem Lernen basierenden Autoencoders unter Berücksichtigung dessen decodiert, dass an der drahtlosen Vorrichtung (10; 800; 1006) eine Maske auf die codierten CSI-Daten angewendet wurde, wobei die Maske unmaskierte Datenelemente und maskierte Datenelemente der codierten CSI-Daten definiert, und dass die empfangenen Daten die maskierten Datenelemente ausschließen.

**10.** Verfahren nach Anspruch 9,
wobei der Decoder-Teil des Autoencoders basierend auf der Maske optimiert wird.

**11.** Verfahren nach Anspruch 9 oder 10, umfassend, dass:
der Knoten (100; 900; 1004) Steuerdaten zur Auswahl der Maske für die drahtlose Vorrichtung bereitstellt, wobei die Steuerdaten eine Definition eines Satzes einer oder mehrerer Masken umfassen, wobei ferner die Steuerdaten die Maske angeben, die von der drahtlosen Vorrichtung (10; 800; 1006) angewendet werden soll.

**12.** Drahtlose Vorrichtung (10; 800; 1006) für Betrieb in einem Drahtloskommunikationsnetzwerk, wobei die drahtlose Vorrichtung (10; 800; 1006) zu Folgendem ausgelegt ist:

- Messen von Kanalzustandsinformationsdaten, CSI-Daten, für einen Drahtloskanal zwischen der drahtlosen Vorrichtung (10; 800; 1006) und einem Knoten (100; 900; 1004) des Drahtloskommunikationsnetzwerks;
- Codieren der CSI-Daten durch den Encoder-Teil eines auf maschinellem Lernen basierenden Autoencoder;

**dadurch gekennzeichnet, dass** die drahtlose Vorrichtung (10; 800; 1006) ferner zu Folgendem ausgelegt ist:

- Anwenden einer Maske auf die codierten CSI-Daten, wobei die Maske unmaskierte Datenelemente und maskierte Elemente der codierten CSI-Daten definiert; und
- Senden der codierten CSI-Daten unter Ausschluss der maskierten Datenelemente an den Knoten (100; 900; 1004).

13. Drahtlose Vorrichtung (10; 800; 1006) nach Anspruch 12,
wobei die drahtlose Vorrichtung (10; 800; 1006) zum Durchführen eines Verfahrens nach einem der Ansprüche 2 bis 8 ausgelegt ist.

14. Knoten (100; 900; 1004) für ein Drahtloskommunikationssystem, wobei der Knoten (100; 900; 1004) zu Folgendem ausgelegt ist:

- für einen Drahtloskanal zwischen einer drahtlosen Vorrichtung (10; 800; 1006) und einem Knoten (100; 900; 1004) des Drahtloskommunikationsnetzwerks Empfangen von Daten, die Kanalzustandsinformationsdaten, CSI-Daten, darstellen, die durch die drahtlose Vorrichtung (10; 800; 1006) gemessen und an der drahtlosen Vorrichtung (10; 800; 1006) durch einen Encoder-Teil eines auf maschinellem Lernen basierenden Autoencoders codiert wurden; und

**dadurch gekennzeichnet, dass** der Knoten (100; 900; 1004) ferner zu Folgendem ausgelegt ist:

- Decodieren der empfangenen Daten durch einen Decoder-Teil des auf maschinellem Lernen basierenden Autoencoders unter Berücksichtigung dessen, dass an der drahtlosen Vorrichtung (10; 800; 1006) eine Maske auf die codierten CSI-Daten angewendet wurde, wobei die Maske unmaskierte Datenelemente und maskierte Datenelemente der codierten CSI-Daten definiert, und dass die empfangenen Daten die maskierten Datenelemente ausschließen.

15. Knoten (100; 900; 1004) nach Anspruch 14,
wobei der Knoten (100; 900; 1004) zum Durchführen eines Verfahrens nach einem der Ansprüche 9 bis 11 ausgelegt ist.

**Revendications**

1. Procédé de commande de communication sans fil dans un réseau de communication sans fil, le procédé comprenant :

un dispositif sans fil (10 ; 800 ; 1006) mesurant des données d'informations d'état de canal, CSI, pour un canal sans fil entre le dispositif sans fil (10 ; 800 ; 1006) et un nœud (100 ; 900 ; 1004) du réseau de communication sans fil ;
le dispositif sans fil (10 ; 800 ; 1006) codant les données CSI par une partie codeur d'un auto-codeur basé sur apprentissage automatique ;
**caractérisé par** :

le dispositif sans fil (10 ; 800 ; 1006) appliquant un masque aux données CSI codées, le masque définissant des éléments de données non masqués et des éléments masqués des données CSI codées ; et
le dispositif sans fil (10 ; 800 ; 1006) transmettant les données CSI codées à l'exclusion des éléments de données masqués au nœud (100 ; 900 ; 1004).

2. Procédé selon la revendication 1,
dans lequel une partie décodeur de l'auto-codeur, qui est appliquée au niveau du nœud pour reconstruire les données CSI à partir des éléments de données non masqués des données CSI codées, est optimisée sur la base du masque.

3. Procédé selon la revendication 1 ou 2, comprenant :

le dispositif sans fil (10 ; 800 ; 1006) sélectionnant le masque sur la base des données de commande reçues depuis le nœud (100 ; 900 ; 1004), dans lequel les données de commande incluent une définition d'un ensemble d'un ou plusieurs masques, en outre dans lequel les données de commande indiquent le masque à appliquer par le dispositif sans fil (10 ; 800 ; 1006).

4. Procédé selon l'une quelconque des revendications précédentes, comprenant :
   le dispositif sans fil (10 ; 800 ; 1006) sélectionnant le masque sur la base d'au moins l'un parmi :

   des conditions de fonctionnement du dispositif sans fil (10 ; 800 ; 1006) ;
   un indicateur de rang du canal sans fil ;
   un type du dispositif sans fil (10 ; 800 ; 1006) ; et
   un niveau de qualité de reconstruction des données CSI à partir des données CSI codées.

5. Procédé selon l'une quelconque des revendications 3 et 4,
   dans lequel le dispositif sans fil (10 ; 800 ; 1006) indique le masque sélectionné au nœud.

6. Procédé selon l'une quelconque des revendications précédentes,

   dans lequel les données CSI codées sont définies dans un espace de données multidimensionnel ; et
   dans lequel les éléments de données non masqués des données CSI codées correspondent à un ou plusieurs premiers sous-espaces géométriques de l'espace de données et les éléments de données masqués des données CSI codées correspondent à un ou plusieurs deuxièmes sous-espaces géométriques de l'espace de données.

7. Procédé selon l'une quelconque des revendications précédentes,

   dans lequel les données CSI codées sont définies dans un espace de données multidimensionnel ; et
   dans lequel les éléments de données non masqués des données CSI codées correspondent à une ou plusieurs premières dimensions de l'espace de données et les éléments de données masqués des données CSI codées correspondent à une ou plusieurs deuxièmes dimensions de l'espace de données.

8. Procédé selon l'une quelconque des revendications précédentes, comprenant :
   pendant l'entraînement de l'auto-codeur, le dispositif sans fil (10 ; 800 ; 1006) transmettant les données CSI codées sans appliquer de masque.

9. Procédé de commande de communication sans fil dans un réseau de communication sans fil, le procédé comprenant :
   pour un canal sans fil entre un dispositif sans fil (10 ; 800 ; 1006) et un nœud (100 ; 900 ; 1004) du réseau de communication sans fil, le nœud (100 ; 900 ; 1004) recevant des données représentant des données d'informations d'état de canal, CSI, mesurées par le dispositif sans fil (10 ; 800 ; 1006) et codées au niveau du dispositif sans fil (10 ; 800 ; 1006) par une partie codeur d'un auto-codeur basé sur apprentissage automatique ; et **caractérisé par** :
   le nœud (100 ; 900 ; 1004) décodant les données reçues par une partie décodeur de l'auto-codeur basé sur apprentissage automatique, en tenant compte du fait que, au niveau du dispositif sans fil (10 ; 800 ; 1006), un masque a été appliqué aux données CSI codées, le masque définissant des éléments de données non masqués et des éléments masqués des données CSI codées, et les données reçues excluent les éléments de données masqués.

10. Procédé selon la revendication 9,
    dans lequel la partie décodeur de l'auto-codeur est optimisée sur la base du masque.

11. Procédé selon la revendication 9 ou 10, comprenant :
    le nœud (100 ; 900 ; 1004) fournissant des données de commande pour une sélection du masque au dispositif sans fil, dans lequel les données de commande incluent une définition d'un ensemble d'un ou plusieurs masques, en outre dans lequel les données de commande indiquent le masque à appliquer par le dispositif sans fil (10 ; 800 ; 1006).

12. Dispositif sans fil (10 ; 800 ; 1006) destiné à fonctionner dans un réseau de communication sans fil, le dispositif sans fil (10 ; 800 ; 1006) étant configuré pour :

    - mesurer des données d'informations d'état de canal, CSI, pour un canal sans fil entre le dispositif sans fil (10 ; 800 ; 1006) et un nœud (100 ; 900 ; 1004) du réseau de communication sans fil ;

- coder les données CSI par une partie codeur d'un auto-codeur basé sur apprentissage automatique ;

**caractérisé en ce que** le dispositif sans fil (10 ; 800 ; 1006) est en outre configuré pour :

- appliquer un masque aux données CSI codées, le masque définissant des éléments de données non masqués et des éléments masqués des données CSI codées ; et
- transmettre les données CSI codées à l'exclusion des éléments de données masqués au nœud (100 ; 900 ; 1004).

13. Dispositif sans fil (10 ; 800 ; 1006) selon la revendication 12,
dans lequel le dispositif sans fil (10 ; 800 ; 1006) est configuré pour réaliser un procédé selon l'une quelconque des revendications 2 à 8.

14. Nœud (100 ; 900 ; 1004) destiné à un réseau de communication sans fil, le nœud (100 ; 900 ; 1004) étant configuré pour :

- pour un canal sans fil entre un dispositif sans fil (10 ; 800 ; 1006) et le nœud (100 ; 900 ; 1004), recevoir des données représentant des données d'informations d'état de canal, CSI, mesurées par le dispositif sans fil (10 ; 800 ; 1006) et codées au niveau du dispositif sans fil (10 ; 800 ; 1006) par une partie codeur d'un auto-codeur basé sur apprentissage automatique ; et

**caractérisé en ce que** le nœud (100 ; 900 ; 1004) est en outre configuré pour :

- décoder les données reçues par une partie décodeur de l'auto-codeur basé sur apprentissage automatique, en tenant compte du fait que, au niveau du dispositif sans fil (10 ; 800 ; 1006), un masque a été appliqué aux données CSI codées, le masque définissant des éléments de données non masqués et des éléments masqués des données CSI codées, et les données reçues excluent les éléments de données masqués.

15. Nœud (100 ; 900 ; 1004) selon la revendication 14,
dans lequel le nœud (100 ; 900 ; 1004) est configuré pour réaliser un procédé selon l'une quelconque des revendications 9 à 11.

**FIG. 1**

**FIG. 2**

FIG. 3

**FIG. 4A**

**FIG. 4B**

**FIG.5A**

**FIG. 5B**

610 — Receive control data

620 — Measure CSI data

630 — Enocde CSI data
by encoder part of autoencoder

640 — Select mask

650 — Apply mask

660 — Transmit masked encoded CSI data

**FIG. 6**

710 — Select mask

720 — Provide control data

730 — Receive data

740 — Decode received data
by decoder part of autoencoder

750 — Train autoencoder

**FIG. 7**

FIG. 8

FIG. 9

HOST
1002

HOST PROVIDES USER DATA
1008

HOST INITIATES
TRANSMISSION CARRYING
THE USER DATA TO UE
1010

HOST RECEIVES THE
USER DATA
TRANSMITTED FROM
UE
1022

CONNECTION
1060

NETWORK NODE
1004

NETWORK NODE
TRANSMITS THE USER
DATA TO UE
1012

NETWORK NODE
TRANSMITS THE USER
DATA TO HOST
1020

OTT
CONNECTION
1050

WIRELESS
CONNECTION
1070

UE
1006

UE RECEIVES THE
USER DATA
1014

UE INITIATES
TRANSMISSION OF THE
USER DATA TO HOST
1018

UE PROVIDES USER
DATA
1016

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022015221 A1